# FASCICULE DE BREVET EUROPEEN

(11) **EP 1 400 398 B1**
(45) Date de publication et mention de la délivrance du brevet: **19.04.2006**
(21) Numéro de dépôt: 03103429.1
(22) Date de dépôt: 17.09.2003
(51) Int. Cl.: B60N 2/24, B64D 11/06

(54) **Dispositif et systéme pour le filtrage des mouvements vibratoires d'un support de passager, et support de passager equipe d'un tel systéme**
Vorrichtung und System zum Filtrieren der Schwingungen einer Passagierhalterung, und mit solchem System ausgestatteter Passagierhalterung.
Device and system for filtering vibratory mouvements of a passenger support, and passenger support equiped with such a system.

(30) Priorité: 19.09.2002 FR 0211610
(43) Date de publication de la demande: 24.03.2004
(73) Titulaire: AIRBUS France, 31060 Toulouse (FR)
(72) Inventeur: Chareyre, Philippe, 31270, CUGNAUX (FR)
(74) Mandataire: Poulin, Gérard

(56) Documents cités:
- DE-A- 19 503 660
- FR-A- 1 335 575
- US-A- 3 632 076
- US-A- 4 003 534
- US-A- 4 183 492

## Description

### DOMAINE TECHNIQUE

La présente invention se rapporte au domaine technique des supports de passager dans un véhicule, et particulièrement au filtrage des mouvements vibratoires d'un siège de véhicule.

On entend généralement par support de passager un siège installé dans un véhicule, mais le terme support s'étend naturellement à d'autres éléments de mobilier pour passagers comme un lit ou une banquette.

L'invention trouve une application particulière pour le filtrage des mouvements vibratoires des sièges d'aéronef, lesdits mouvements vibratoires étant engendrés par les vibrations provenant du fuselage de l'aéronef et se propageant aux sièges par l'intermédiaire du plancher.

On rappelle que le filtrage des vibrations provenant du plancher consiste à confiner l'énergie vibratoire au niveau du plancher, en limitant la transmission desdites vibrations aux supports des passagers. Le filtrage des vibrations est donc différent de l'amortissement des vibrations.

La présente invention vise un dispositif articulé, qui est interposé entre le plancher du véhicule et le support de passager, qui filtre les mouvements du support transmis par le plancher du véhicule, en permettant audit support de se déplacer le long d'une trajectoire prédéterminée et contrôlée.

Elle vise également un système de filtrage des mouvements d'un support de passager, dus aux vibrations provenant du plancher du véhicule et transmises au support de passager, qui met en oeuvre de tels dispositifs articulés.

Elle vise enfin un support de passager, équipé d'un système conforme à l'invention.

On précise que le terme « passager » signifie ici « personne transportée », et s'étend de manière implicite au personnel de service du véhicule, le cas échéant.

### ETAT DE LA TECHNIQUE ANTERIEURE

Lors du transport de passagers dans des véhicules, les changements de trajectoire du véhicule ou les obstacles franchis par les véhicules, ou encore les moyens de propulsion engendrent des efforts qui se transmettent aux supports des passagers, et par suite aux passagers eux-mêmes.

On cherche le plus souvent à améliorer le confort des passagers en réduisant ces efforts ou leurs effets.

Par exemple, dans le cas d'un transport par train, le franchissement rapide de courbes engendre notamment des forces centrifuges et des forces latérales. Le document DE 19 503 660 A1 décrit un dispositif destiné à améliorer le confort des passagers en réduisant les effets desdites forces centrifuges et latérales et en amortissant les oscillations latérales induites. Ce dispositif se trouve interposé entre lé sol, ou plancher du véhicule, et l'assise du siège, et remplace les pieds dudit siège. Il comporte différents composants, tels que des paliers, des tiges de couplage, des éléments de positionnement et d'amortissement, qui forment une ou plusieurs chaînes cinématiques à quatre éléments disposées selon une direction transversale du siège. Lorsque ce dispositif est en service, le siège du passager est capable de basculer latéralement autour d'un point de basculement fictif (D) situé au-dessus de son centre de gravité.

Dans le cas d'un transport par aéronef, la situation est sensiblement différente. Un aéronef, en vol, est soumis à différentes perturbations qui excitent les surfaces portantes (voilure, dérive, ...) et/ou les installations motrices. Les vibrations engendrées par ces perturbations se propagent au plancher de la cabine de l'aéronef, par l'intermédiaire du fuselage, puis aux supports des passagers. Ces vibrations génèrent chez les passagers des troubles physiologiques , tels que malaises, nausées, inconfort, etc..., qui peuvent notablement les incommoder.

L'utilisation du dispositif décrit dans le DE 19 503 660 aurait pour effet que les vibrations latérales transmises au support de passager par le plancher seraient ressenties à l'emplacement du point fictif (D), c'est-à-dire au niveau de la tête du passager, ce qui n'est pas satisfaisant du point de vue du confort. Cet inconvénient rend inadaptée l'utilisation du dispositif décrit dans le DE 19 503 660 dans le cas du transport de passagers dans un aéronef.

### EXPOSÉ DE L'INVENTION

La présente invention a pour but de remédier aux inconvénients mentionnés ci-dessus du dispositif de l'art antérieur.

Ce but est atteint au moyen d'un dispositif et d'un système aptes à filtrer les vibrations provenant du plancher de l'aéronef.

Le filtrage des vibrations transmises à un support de passager est réalisé en entraînant le support de passager de manière à ce qu'il effectue des petits déplacements le long d'une trajectoire prédéterminée et contrôlée, ladite trajectoire étant contenue dans un plan.

Le système de filtrage conforme à l'invention est constitué d'au moins un dispositif, qui consiste en une chaîne articulée permettant ce petit déplacement du support le long d'une trajectoire plane.

Dans le cas d'un aéronef, on a constaté que les mouvements du support de passager engendrés par les vibrations du fuselage se produisent principalement dans un plan transversal, qui est perpendiculaire à l'axe du fuselage. Le dispositif et le système selon l'invention sont aptes à filtrer les mouvements vibratoires transmis au support de passager dans un plan privilégié, qui peut notamment être un plan transversal.

Selon l'invention, le dispositif articulé, destiné à faire partie d'un système de filtrage des mouvements vibratoires provenant d'un plancher du véhicule et transmis à un support de passager, est installé entre ledit plancher et ledit support, et comprend les cinq éléments suivants :
- deux socles solidaires du plancher du véhicule,
- une pièce centrale mobile articulée au support,
- deux tiges de liaison, articulées chacune à l'un des socles et à la pièce centrale,

Ces cinq éléments étant articulés entre eux et au support par des liaisons en rotation autour de cinq axes de rotation, lesdits axes de rotation étant parallèles les uns aux autres, de telle manière que l'axe de rotation entre la pièce centrale mobile et le support se déplace en translation le long d'une trajectoire curviligne contenue dans un plan qui est perpendiculaire au plan du plancher.

Un tel dispositif présente l'avantage d'être simple à mettre en oeuvre, tout en étant fiable.

Le dispositif articulé peut être installé de telle manière que les cinq axes de rotation soient perpendiculaires au plan longitudinal de symétrie du véhicule. Dans ce cas, les déplacements autorisés du support de passager sont contenus dans un plan longitudinal du véhicule.

Le dispositif articulé peut aussi être installé de telle manière que les cinq axes de rotation soient parallèles au plan antéro-postérieur du véhicule. Dans ce cas, les déplacements autorisés du support de passager sont contenus dans un plan transversal du véhicule.

De préférence, lorsque le véhicule est un aéronef, le dispositif articulé est installé par rapport au plancher de l'aéronef avec les axes de rotation orientés selon une direction longitudinale dudit véhicule, de manière à filtrer les mouvements du support de passager selon un plan transversal.

De préférence, le dispositif articulé est installé entre le plancher et une partie basse du support, ladite partie basse étant solidaire de l'assise du support.

Selon un mode de réalisation préféré de l'invention, la partie basse du support est un pied de support, par exemple un pied de siège. Dans ce cas, le système de filtrage des mouvements d'un support de passager, dus aux vibrations provenant du plancher du véhicule et transmises au support de passager, est constitué d'au moins un dispositif articulé tel que ci-dessus mentionné, chaque dispositif étant interposé entre le plancher du véhicule et l'un des pieds du support. Ainsi lorsque le support est muni d'un seul pied, le système comporte un seul dispositif. Pour des raisons de stabilité, on préfère que le support soit muni d'au moins trois pieds. Dans ce cas, le système comporte au moins trois dispositifs. De manière analogue, lorsque le support est muni de quatre pieds, le système comporte quatre dispositifs, etc ...

Selon un autre mode de réalisation préféré de l'invention, la partie basse du support, fixée à l'assise du support, est une plaque disposée de façon à être sensiblement parallèle au plancher et fixée aux pieds du support. Dans ce cas, chaque dispositif constitutif du système de filtrage est interposé entre le plancher du véhicule et ladite plaque. Cet agencement présente l'avantage d'éviter une surélévation excessive du support lorsqu'il est équipé d'un système conforme à l'invention. En particulier, il est alors possible de raccourcir ou même de supprimer les pieds du support.

Un avantage du dispositif et du système de filtrage selon l'invention réside dans le fait que l'efficacité du système de filtrage est indépendante de la masse qu'il supporte, c'est-à-dire de la masse du siège, augmentée le cas échéant de la masse d'un passager.

De manière optionnelle, le dispositif selon l'invention, respectivement le système selon l'invention, est équipé d'au moins un moyen ou mécanisme de blocage ou de verrouillage. Lorsque ledit moyen ou mécanisme de blocage ou de verrouillage est activé, le dispositif de filtrage, respectivement le système de filtrage, est rendu inopérant. Au contraire, lorsque ledit moyen ou mécanisme de blocage ou de verrouillage n'est pas activé, le dispositif de filtrage, respectivement le système de filtrage, filtre les mouvements vibratoires provenant du plancher du véhicule et transmis au support de passager auquel est associé ledit dispositif de filtrage, respectivement ledit système de filtrage.

### BRÈVE DESCRIPTION DES DESSINS

L'invention sera mieux comprise à la lecture de la description détaillée qui va suivre de modes de réalisation préférés de l'invention, qui sont fournis à titre d'exemples non limitatifs, en référence aux dessins annexés dans lesquels :
- la figure 1 représente en perspective un dispositif conforme à l'invention installé sous un pied de support;
- la figure 2 est un schéma fonctionnel illustrant la cinématique du dispositif de la figure 1, dans le plan des déplacements ;
- la figure 3 illustre en vue de côté une mise en oeuvre du système de l'invention équipant un support de passager ;
- la figure 4 est analogue à la figure 3 pour une autre mise en oeuvre du système de l'invention équipant un support de passager.

### EXPOSÉ DÉTAILLÉ DES MODES DE RÉALISATION PREFERES

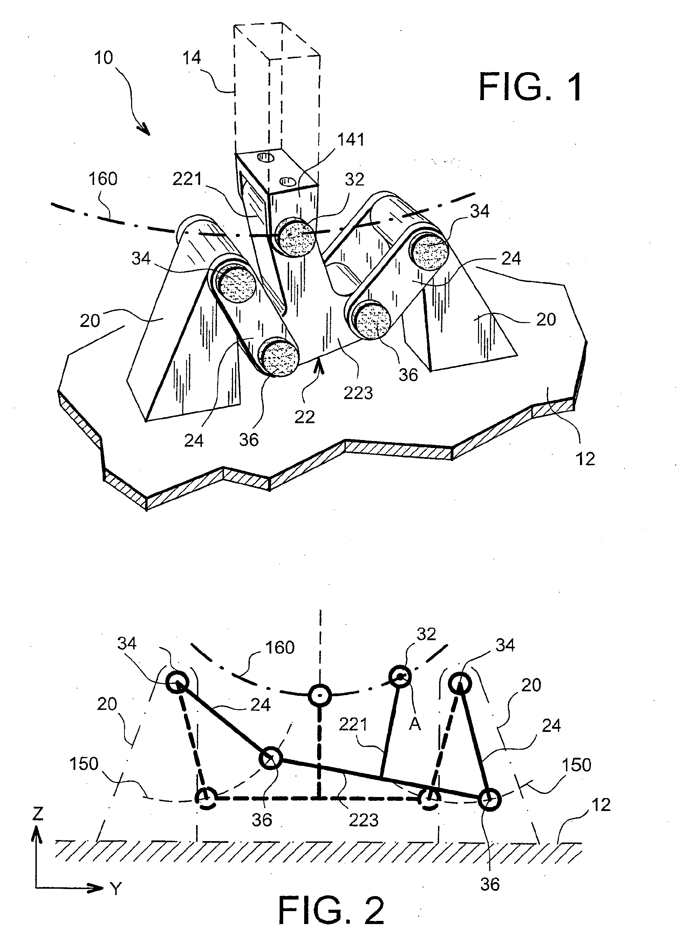

En se référant à la figure 1, le dispositif 10 est installé entre le plancher 12 du véhicule et une partie basse 14 solidaire d'un support (non représenté à la figure 1) du véhicule.

Le dispositif 10 comprend :
- deux socles 20 fixés sur le plancher 12 du véhicule,
- une pièce centrale 22 en forme de « T » inversé, articulée à la partie basse 14,
- deux tiges de liaison 24 articulées chacune d'une part à l'un des socles 20 et d'autre part à la pièce centrale 22.

De manière préférée, les tiges de liaison 24 sont des biellettes doubles.

Sur l'exemple illustré à la figure 1, la partie basse 14 du support du véhicule est un pied 14 de support, qui est représenté en traits interrompus. Au bas de ce pied 14 est fixée une chape 141 qui constitue une pièce intermédiaire d'adaptation, apte à recevoir un axe de rotation 32 pour son articulation avec l'extrémité libre de la portion formant la barre longitudinale 221 du « T » de la pièce centrale 22.

Chaque biellette double 24 est articulée par l'une de ses extrémités à l'un des socles fixes 20. L'articulation est réalisée par une rotation autour d'un axe de rotation 34, qui est également fixe.

Chaque biellette double 24 est également articulée par l'autre de ses extrémités à l'une des extrémités de la portion 223 formant la barre transversale du « T » de la pièce centrale 22. Chacune de ces deux articulations est réalisée par une rotation autour d'un axe de rotation 36, qui est mobile.

Le dispositif 10 est configuré de façon que les axes de rotation 32, 34, 36 soient parallèles entre eux et parallèles au plan du plancher 2.

Les biellettes doubles 24, la barre longitudinale 221 du « T » et la barre transversale 223 du « T » présentent une épaisseur appropriée pour supporter les axes de rotation 32, 36 par l'intermédiaire d'un moyen autorisant un mouvement rotatif, tel que par exemple un roulement, un palier, ou un pivot élastique. Selon une variante, ledit moyen autorisant un mouvement rotatif est équipé d'un moyen amortisseur externe. Les axes de rotation 34 sont aussi supportés dans les socles 20 par l'intermédiaire de moyens autorisant un mouvement rotatif, qui peut être équipé d'un moyen amortisseur externe.

Les biellettes doubles 24, la barre longitudinale 221 du « T » et la barre transversale 223 du « T » constituent ainsi des segments d'une chaîne cinématique dont le mouvement d'ensemble est contenu dans un plan (Y, Z) qui est perpendiculaire à la fois au plan (X, Y) du plancher 12 et aux axes de rotation 32, 34, 36 du dispositif 10.

La cinématique du dispositif 10 est illustrée de façon schématique à la figure 2.

Sur la figure 2, ainsi que sur les figures suivantes 3 et 4, ont été représentés les axes d'un référentiel orthonormé (X, Y, Z), défini de la manière suivante :
- le plan (X, Y) est le plan du plancher 12,
- la direction Z est perpendiculaire au plan du plancher 12,
- la direction X est la direction commune aux axes 32, 34, 36 du dispositif 10.

Cette figure montre, dans le plan (Y, Z) des déplacements, les mouvements de rotation autorisés des différents segments 221, 223, 24, autour des différents axes de rotation 32, 34, 36. Elle montre également la trajectoire résultante 160 d'un point A de l'axe de rotation 32 commun à la pièce centrale 22 et au pied 14.

Les déplacements des segments 221, 223, 24 sont représentés entre une position de repos ou d'équilibre, matérialisée en traits interrompus, et une position déplacée, matérialisée en traits pleins.

Pour faciliter la compréhension, les socles 20 ont été représentés en traits mixtes, et les références numériques n'ont été indiquées que pour la position déplacée (traits pleins) du dispositif 10.

Chacun des axes de rotation 34 d'une extrémité de chaque biellette double 24 par rapport à un socle 20 est fixe, puisqu'il est solidaire du socle correspondant 20, lui-même fixe. Par conséquent l'axe de rotation 36 de l'autre extrémité de ladite biellette double 24 se déplace sur une trajectoire circulaire 150.

La pièce centrale 22 en forme de « T » est mobile. Son mouvement est imposé par les trajectoires circulaires 150 des axes de rotation 36 situés à chacune des extrémités de la barre transversale 223 du « T ».

Lors du déplacement de la pièce centrale 22, chaque point A de l'axe de rotation 32 de l'extrémité de la barre longitudinale 221 du « T » parcourt une trajectoire curviligne 160, contenue dans un plan (Y, Z) perpendiculaire au plan (X, Z) du plancher 12.

Il est possible de contrôler cette trajectoire curviligne de l'axe de rotation 32 et de la modifier, en modifiant la distance entre les deux axes de rotation 34 fixes des socles 22 fixes, et/ou la distance entre chacun de ces axes de rotation 34 fixes et le plan du plancher 12, et/ou en modifiant la longueur des segments 24, 221, 223.

Selon le mode de réalisation du dispositif 10 illustré aux figures 1 et 2, les axes de rotation fixes 34 sont situés chacun à la même distance du plan du plancher 12, et les biellettes doubles 24 présentent la même distance entre leurs deux axes de rotation 34, 36, de telle sorte que, dans la position de repos ou d'équilibre du dispositif 10, la barre transversale 223 du « T » de la pièce centrale 22 est parallèle au plan du plancher 2.

Toujours selon le mode de réalisation du dispositif 10 illustré aux figures 1 et 2, la distance entre les axes de rotation 34 fixes est inférieure à la somme des longueurs des deux biellettes doubles 24 et de la barre transversale 223 du « T » de la pièce centrale 22. Ainsi, au cours du déplacement de la pièce centrale 22, la barre transversale 223 du « T » reste située entre le plan du plancher et un plan passant par les deux axes fixes 34. Avec cette configuration préférée, les trajectoires 150 et 160 ont leur convexité orientée du côté du plancher 2, et la partie basse 14 du support revient en position de repos ou d'équilibre stable sous l'action de la pesanteur, lorsqu'aucun autre effort ne s'exerce sur elle.

L'assise du support, et par suite le support lui-même, sont entraînés dans un mouvement d'ensemble avec la partie basse 14.

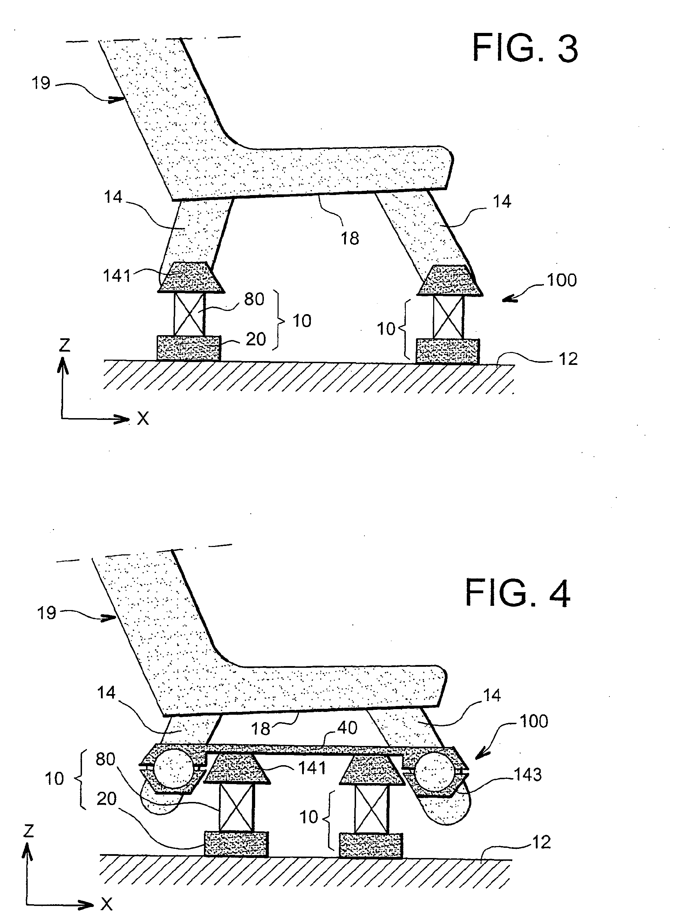

On va maintenant décrire le système de filtrage conforme à l'invention et deux variantes de configuration de ce système entre le plancher 2 du véhicule et l'assise du support, en référence aux figures 3 et 4.

Le système 100 conforme à l'invention comprend au moins un dispositif articulé 10 tel que précédemment décrit, qui est installé entre le plancher 12 du véhicule et une partie basse 14, 40, 18 du support 19. Ladite partie basse peut avantageusement être un pied 14 du support ou une plaque intermédiaire commune 40 (qui sera décrite ultérieurement), ou même l'assise 18 du support 19.

Lorsque le système 100 ne comprend qu'un seul dispositif 10, il est nécessaire de compléter ce système par des moyens de butée additionnels pour limiter les déplacements de ladite partie basse du support.

C'est pourquoi, il est préféré, conformément à l'invention, que le système comprenne au moins trois dispositifs 10 tels que précédemment décrits. Une telle configuration est conforme avec les exigences usuelles de stabilité du support, qui est muni à cet effet d'au moins trois pieds, et le plus souvent de quatre pieds.

Sur la figure 3 est illustré un système 100 de filtrage des mouvements d'un support 19 de véhicule, dus aux vibrations provenant du plancher 12 du véhicule et transmises audit support, qui équipe un support 19 de véhicule ayant une assise 18 et muni de quatre pieds 14 rigidement fixés à ladite assise 18. Le support 19 est représenté en vue latérale, de telle sorte que seulement deux pieds 14 et deux dispositifs 10 sont représentés.

Chaque dispositif 10 du système 100 est installé sous le pied 14 correspondant du support 19 de telle manière que les axes de rotation des dispositifs 10 se trouvent orientés de manière à être tous parallèles entre eux, et perpendiculaires à la direction suivant laquelle se propage le mouvement qui doit être filtré par le système de filtrage.

Dans le cas où le véhicule est un aéronef, il est donc préféré que les axes de rotation des dispositifs 10 soient orientés parallèlement à la direction d'avancée du véhicule. Selon la convention d'axes habituellement en vigueur dans le domaine des aéronefs, la direction X est la direction d'avancée du véhicule, et la direction Y est une direction transversale. Par suite, le support 19 se déplace selon une translation d'ensemble le long d'une trajectoire curviligne contenue dans un plan transversal du véhicule.

Chaque dispositif 10 est donc représenté en vue latérale à la figure 3 de façon simplifiée par un socle 20, et un ensemble 80 qui figure les segments mobiles 24, 221, 223, et une chape 141 pour l'adaptation du dispositif 10 au pied 14. Ladite chape 141 peut avantageusement être la chape qui permet de fixer usuellement le pied du support 19 au plancher, lorsque ledit support 19 est un siège qui n'est pas équipé du dispositif ou du système selon l'invention.

Cette configuration du système 100 présente l'avantage de ne pas avoir à modifier des sièges de véhicules déjà existants pour les équiper du dispositif ou du système selon l'invention.

Mais cette configuration du système 100 présente parfois l'inconvénient de surélever le support 19.

Pour pallier cet inconvénient, une variante de configuration du système est proposée. Elle est illustrée à la figure 4, qui ne sera décrite que pour ses différences avec la figure 3.

Selon cette variante, le système 100 comprend, outre les dispositifs 10, une plaque intermédiaire commune 40, fixée rigidement aux pieds 14 du support 19, par des moyens de fixation 143. Elle est installée à une hauteur intermédiaire entre l'assise 18 du support 19 et le plan du plancher 12, et se trouve de préférence disposée parallèlement au plan du plancher 12.

Selon cette variante, les dispositifs 10 sont interposés entre le plancher 12 et ladite plaque intermédiaire 40, qui constitue la partie basse solidaire de l'assise 18 du support 19. La liaison entre la plaque intermédiaire commune 40 et chaque dispositif 10 est une articulation en rotation. Cette articulation en rotation est réalisée au moyen d'un axe de rotation 32 commun à la barre longitudinale 221 du « T » de la partie centrale 22 et à une chape 141. Selon une variante non représentée à la figure 4, l'axe de rotation 32 est ménagé directement dans la plaque 40, par exemple d'une manière analogue aux axes 34 dans les socles 20.

D'autres variantes possibles de configuration du système n'ont pas été représentées aux figures.

On peut envisager une variante dans laquelle la plaque intermédiaire commune 40 n'est pas fixée aux pieds 14 du support, mais directement à l'assise 18 du support 19. Dans ce cas, il est même possible de raccourcir ou de supprimer les pieds du support, tout en prévoyant des moyens pour que l'assise 18 du support 19 se trouve à une hauteur normalisée du plancher 12.

On peut également envisager une autre variante, dans laquelle la partie basse du support est l'assise 18 du support elle-même. Dans ce cas, la présence d'une plaque intermédiaire 40 n'est plus nécessaire. La présence de pieds 14 n'est plus nécessaire non plus. Là aussi, des moyens doivent être prévus pour assurer une hauteur suffisante entre l'assise 18 du support 19 et le plancher 12.

Le dispositif et le système de l'invention viennent d'être décrits dans une application relative à des supports de passagers d'un véhicule. Ils sont particulièrement adaptés au filtrage des vibrations affectant les sièges d'un aéronef.

Ils peuvent être étendus à d'autres applications relatives à d'autres éléments de mobilier pour passager, comme un lit ou une banquette, ou une plate-forme, ou à tout support destiné à recevoir un ou des passager(s) et dont on souhaite améliorer le confort dans des conditions de vibrations subies par ce(s) passager(s), sans pour autant sortir du cadre de l'invention.

## Revendications

1. Dispositif articulé (10) destiné à faire partie d'un système (100) de filtrage des mouvements vibratoires provenant du plancher (12) d'un véhicule et transmis à un support (19) de passager et installé entre ledit plancher (12) et ledit support (19) **caractérisé en ce qu'**il comprend les cinq éléments suivants :
- deux socles (20) solidaires du plancher (12) du véhicule,
- une pièce centrale mobile (22) articulée au support (19),
- deux tiges de liaison (24), articulées chacune à l'un des socles (20) et à la pièce centrale (22),
et **en ce que** ces cinq éléments (20, 22, 24) sont articulés entre eux et au support (19) par des liaisons de rotation autour de cinq axes de rotation (34, 36, 32) parallèles les uns aux autres, de telle manière que l'axe de rotation (32) entre la pièce centrale mobile (22) et le support (19) se déplace en translation le long d'une trajectoire curviligne (160) contenue dans un plan (Y, Z) qui est perpendiculaire au plan du plancher (12).

2. Dispositif (10) selon la revendication 1, **caractérisé en ce que** la pièce centrale (22) présente une forme de « T » inversé, les cinq éléments (20, 22, 24) étant reliés entre eux et au support (19) de la manière suivante :
- chaque tige de liaison (24) est reliée par l'une de ses extrémités à l'un des deux socles (20), et est apte à tourner autour d'un axe (34) dudit socle (20),
- chaque tige de liaison (24) est reliée par l'autre de ses extrémités à l'une des extrémités de la barre transversale (223) du « T » de la pièce centrale (22), la tige de liaison (24) et la pièce centrale (22) étant aptes à tourner l'une par rapport à l'autre autour d'un axe commun (36),
- l'extrémité libre de la barre longitudinale (221) du « T » de la pièce centrale (22) est reliée au support (19), la pièce centrale (22) et le support (19) étant aptes à tourner l'une par rapport à l'autre autour d'un axe commun (32).

3. Dispositif (10) selon la revendication 1 ou 2, **caractérisé en ce que** l'un au moins des axes de rotation (32, 34, 36) est supporté en rotation au moyen de roulements.

4. Dispositif (10) selon la revendication 1 ou 2, **caractérisé en ce que** l'un au moins des axes de rotation (32, 34, 36) est supporté en rotation au moyen de paliers.

5. Dispositif (10) selon la revendication 1 ou 2, **caractérisé en ce que** l'un au moins des axes de rotation (32, 34, 36) est supporté en rotation au moyen de pivots élastiques.

6. Dispositif (10) selon l'une quelconque des revendications 1 à 5, **caractérisé en ce qu'**il est disposé sous le support (19) de telle manière que les axes de rotation (32, 34, 36) sont parallèles à la direction d'avancée du véhicule.

7. Système (100) de filtrage des mouvements d'un support de passager (19) d'un véhicule, dus aux vibrations provenant du plancher (12) du véhicule et transmises au support (19), **caractérisé en ce qu'**il comprend au moins trois dispositifs (10) selon l'une quelconque des revendications 1 à 6.

8. Système (100) selon la revendication 7, **caractérisé en ce que** lesdits dispositifs (10) sont installés selon une configuration dans laquelle tous les axes de rotation (32, 34, 36) desdits dispositifs (10) sont parallèles entre eux.

9. Système selon la revendication 8, **caractérisé en ce que** lesdits dispositifs (10) sont installés selon une configuration dans laquelle tous les axes de rotation (32, 34, 36) desdits dispositifs (10) sont parallèles au plan (X, Y) du plancher (12) du véhicule.

10. Système (100) selon l'une quelconque des revendications 7 à 9, **caractérisé en ce** chaque dispositif (10) est articulé entre le plancher (12) et une partie basse (14, 40) du support (19), solidaire de l'assise (18) du support (19).

11. Système (100) selon la revendication 10, **caractérisé en ce que** chaque dispositif (10) est articulé entre le plancher (12) et l'un des pieds (14) du support (19) et **en ce que** le nombre de dispositifs (10) qu'il comprend est choisi égal au nombre de pieds (14) du support (19) sur lequel il est installé.

12. Système (100) selon la revendication 10 ou 11, **caractérisé en ce que** la pièce centrale (22) de chaque dispositif (19) est articulée à une chape (141) solidaire du pied (14) correspondant du support (19).

13. Système (100) selon la revendication 10, **caractérisé en ce que** chaque dispositif (10) est articulé entre le plancher (12) et une plaque intermédiaire commune (40) solidaire de l'assise (18) du support (19) et disposée entre le plancher (12) du véhicule et l'assise (18) du support (19), ladite plaque (40) étant articulée en rotation à la pièce centrale (22) de chaque dispositif (10).

14. Système (100) selon la revendication 13, **caractérisé en ce que** ladite plaque intermédiaire commune (40) est fixée aux pieds (14) du support (19).

15. Système (100) selon la revendication 13, **caractérisé en ce que** ladite plaque intermédiaire commune (40) et fixée à l'assise (18) du support (19).

16. Système (100) selon l'une quelconque des revendications 13 à 15, **caractérisé en ce que** la pièce centrale (22) de chaque dispositif (10) est articulée à une chape (141) solidaire de ladite plaque (40).

17. Système (100) selon l'une quelconque des revendications 7 à 16, **caractérisé en ce qu'**il équipe un siège (19) d'un aéronef.

18. Siège (19) de véhicule, **caractérisé en ce qu'**il est équipé d'un système de filtrage selon l'une quelconque des revendications 7 à 16.

19. Siège (19) de véhicule, selon la revendication 18, **caractérisé en ce qu'**il est un siège d'aéronef.

## Patentansprüche

1. Gelenkvorrichtung (10), die Teil eines Systems (100) zum Herausfiltern der von dem Boden (12) eines Fahrzeugs kommenden und auf eine Passagierhalterung (19) übertragenen Vibrationsbewegungen bildet, und zwischen dem Boden (12) und der Halterung (19) installiert ist,
**dadurch gekennzeichnet, dass** sie die folgenden fünf Elemente umfasst:
- zwei mit dem Boden (12) des Fahrzeugs einstückige Sockel (20),
- ein mit der Halterung (19) verbundenes zentrales bewegliches Teil (22),
- zwei Verbindungsstangen (24), die jeweils mit einem der Sockel (20) und mit dem zentralen Teil (22) gelenkig verbunden sind,
und dadurch, dass diese fünf Elemente (20,22,24) untereinander und mit der Halterung (19) über Drehverbindungen um fünf zueinander parallele Drehachsen (34,36,32) derart gelenkig verbunden sind, dass sich die Drehachse (32) zwischen dem zentralen beweglichen Teil (22) und der Halterung (19) in Translationsbewegung längs einer gekrümmten Wegstrecke (160) bewegt, die in einer Ebene (YZ) enthalten ist, welche zur Ebene des Bodens (12) senkrecht ist.

2. Vorrichtung (10) nach Anspruch 1, **dadurch gekennzeichnet, dass** das zentrale Teil (22) eine umgekehrte "T"-Form aufweist und die fünf Elemente (20,22,24) untereinander und mit der Halterung (19) auf folgende Weise verbunden sind:
- jede Verbindungsstange (24) ist über eines der Enden mit einem der beiden Sockel (20) verbunden und kann sich um eine Achse (34) des Sockels (20) drehen,
- jede Verbindungsstange (24) ist über das andere ihrer Enden mit einem der Enden des Querholms (223) des "T" des zentralen Teils (22) verbunden, wobei die Verbindungsstange (24) und das zentrale Teil (22) sich in Bezug aufeinander um eine gemeinsame Achse (36) drehen können,
- das freie Ende des Longitudinalholms (221) des "T" des zentralen Teils (22) mit der Halterung (19) verbunden ist, wobei sich das zentrale Teil (22) und die Halterung (19) in Bezug aufeinander um eine gemeinsame Achse (32) drehen können.

3. Vorrichtung (10) nach Anspruch 1 oder 2, **dadurch gekennzeichnet, dass** mindestens eine der Drehachsen (32,34,26) rotationsmäßig mittels Wälzlagern gelagert ist.

4. Vorrichtung (10) nach Anspruch 1 oder 2, **dadurch gekennzeichnet, dass** mindestens eine der Drehachsen (32,34,36) rotationsmäßig mittels Achslagern gelagert ist.

5. Vorrichtung (10) nach Anspruch 1 oder 2, **dadurch gekennzeichnet, dass** mindestens eine der Drehachsen (32,34,36) rotationsmäßig mittels elastischer Drehzapfen gelagert ist.

6. Vorrichtung (10) nach einem der Ansprüche 1 bis 5, **dadurch gekennzeichnet, dass** sie unter der Halterung (19) derart angeordnet ist, dass die Drehachsen (32,34,36) zur Vorwärtsbewegungsrichtung des Fahrzeugs parallel sind.

7. System (100) zum Filtern von Bewegungen einer Passagierhalterung (19) eines Fahrzeugs infolge von Vibrationen, die vom Boden (12) des Fahrzeugs herrühren und auf die Halterung (19) übertragen werden, **dadurch gekennzeichnet, dass** es mindestens drei Vorrichtungen (10) gemäß einem der Ansprüche 1 bis 6 umfasst.

8. System (100) nach Anspruch 7, **dadurch gekennzeichnet, dass** die Vorrichtungen (10) in einer Konfiguration installiert sind, in der alle Drehachsen (32,34,36) der Vorrichtungen (10) parallel zueinander sind.

9. System (100) nach Anspruch 8, **dadurch gekennzeichnet, dass** die Vorrichtungen (10) in einer Konfiguration installiert sind, in der alle Drehachsen (32,34,36) der Vorrichtungen (10) zu der Ebene (XY) des Bodens (12) des Fahrzeugs parallel sind.

10. System (100) nach einem der Ansprüche 7 bis 9, **dadurch gekennzeichnet, dass** jede Vorrichtung (10) zwischen dem Boden (12) und einem unteren Abschnitt (14,40) der Halterung (19), die mit dem Auflager (18) der Halterung (19) einstückig ist, gelenkig verbunden ist.

11. System (100) nach Anspruch 10, **dadurch gekennzeichnet, dass** jede Vorrichtung (10) zwischen dem Boden (12) und einem der Füße bzw. Schenkel (14) der Halterung (19) gelenkig verbunden ist, und dass die Anzahl von Vorrichtungen (10), die es umfasst, gleich der Anzahl von Füßen (14) der Halterung (19), auf der sie installiert ist, gewählt ist.

12. System (100) nach Anspruch 10 oder 11, **dadurch gekennzeichnet, dass** das zentrale Teil (22) jeder Vorrichtung (19) mit einem Gabelgelenk (141) gelenkig verbunden ist, das mit dem entsprechenden Fuß bzw. Schenkel (14) der Halterung (19) einstückig ist.

13. System (100) nach Anspruch 10, **dadurch gekennzeichnet, dass** jede Vorrichtung (10) zwischen dem Boden (12) und einer gemeinsamen Zwischenplatte (40), die mit dem Auflager (18) der Halterung (19) einstückig und zwischen dem Boden (12) des Fahrzeugs und dem Auflager (18) der Halterung (19) angeordnet ist, gelenkig verbunden ist, wobei die Platte (40) rotationsmäßig mit dem zentralen Teil 22 jeder Vorrichtung (10) gelenkig verbunden ist.

14. System (100) nach Anspruch 13, **dadurch gekennzeichnet, dass** die gemeinsame Zwischenplatte (40) an den Füßen (14) der Halterung (19) befestigt ist.

15. System (100) nach Anspruch 13, **dadurch gekennzeichnet, dass** die gemeinsame Zwischenplatte (40) an dem Auflager (18) der Halterung (19) befestigt ist.

16. System (100) nach einem der Ansprüche 13 bis 15, **dadurch gekennzeichnet, dass** das zentrale Teil (22) jeder Vorrichtung (10) mit einem mit der Platte (40) einstückigen Gabelgelenk (141) gelenkig verbunden ist.

17. System (100) nach einem der Ansprüche 7 bis 16, **dadurch gekennzeichnet, dass** es an einem Sitz (19) eines Luftfahrzeugs angebracht ist.

18. Fahrzeugssitz (19), **dadurch gekennzeichnet, dass** er mit einem Filtersystem gemäß einem der Ansprüche 7 bis 16 ausgestattet ist.

19. Fahrzeugssitz (19) nach Anspruch 18, **dadurch gekennzeichnet, dass** er ein Luftfahrzeugsitz ist.

## Claims

1. Articulated device (10) that will form part of a system (100) for filtering vibrational movements from a vehicle floor (12) and transmitted to a passenger support (19) and installed between said floor (12) and said support (19), **characterized in that** it comprises the following five elements:
- two mounts (20) fixed to the vehicle floor (12),
- one mobile central part (22) articulated to the support (19),
- two connecting rods (24), each articulated to one of the mounts (20) and to the central part (22),
and **in that** these five elements (20, 22, 24) are articulated to each other and to the support (19) by rotation joints, the rotations operating about five rotation axes (34, 36, 32) parallel to each other, such that the rotation axis (32) between the mobile central part (22) and the support (19) moves in translation along a curved trajectory (160) contained in a (Y, Z) plane perpendicular to the plane of the floor (12).

2. Device (10) according to claim 1, **characterized in that** the central part (22) is in the shape of an inverted "T" and the five elements (20, 22, 24) are connected together and to the support (19) as follows:
- each connecting rod (24) is connected to one of the mounts (20) through one of its ends and is able to rotate about a rotation axis (34) of said mount (20),
- each connecting rod (24) is connected to one of the ends of the transverse bar (223) of the "T" of the central part (22), at its other end, the connecting rod (24) and the central part (22) being able to rotate with respect to each other about a common rotation axis (36),
- the free end of the longitudinal bar (221) of the "T" of the central part (22) is connected to the support (19), the central part (22) and the support (19) being able to rotate with respect to each other about a common axis (32).

3. Device (10) according to claim 1 or 2, **characterised in that** at least one of the rotation axes (32, 34, 36) is rotatably supported by roller bearings.

4. Device (10) according to claim 1 or 2, **characterised in that** at least one of the rotation axes (32, 34, 36) is rotatably supported by journal bearings.

5. Device (10) according to claim 1 or 2, **characterised in that** at least one of the rotation axes (32, 34, 36) is rotatably supported by elastic pivots.

6. Device (10) according to any of claims 1 to 5, **characterised in that** it is installed under the support (19) such that rotation axes (32, 34, 36) are parallel to the forward direction of movement of the vehicle.

7. System (100) for filtering vibrational movements of a passenger support (19) in a vehicle, originating from the vehicle floor (12) and transmitted to the support (19), **characterised in that** it comprises at least three devices (10) according to any of claims 1 to 6.

8. System (100) according to claim 7, **characterised in that** said devices (10) are configured such that all the rotation axes (32, 34, 36) in said devices (10) are parallel to each other.

9. System according to claim 8, **characterised in that** said devices (10) are configured such that all the rotation axes (32, 34, 36) of said devices (10) are parallel to the plane (X, Y) of the vehicle floor (12).

10. System (100) according to any of claims 7 to 9, **characterised in that** each device (10) is articulated between the floor (12) and a lower part (14, 40) of the support (19), fixed to the bottom seat (18) of the support (19).

11. System (100) according to claim 10, **characterised in that** each device (10) is articulated between the floor (12) and one of the legs (14) of the support (19), and **in that** said system comprises one device (10) for each leg (14) of the support (19) on which it is installed.

12. System (100) according to claim 10 or 11, **characterised in that** the central part (22) in each support (19) is articulated to a clevis (141) which in turn is attached to the corresponding leg (14) of the support (19).

13. System (100) according to claim 10, **characterised in that** each device (10) is articulated between the floor (12) and an intermediate common plate (40) attached to the bottom seat (18) of the support (19) and installed between the vehicle floor (12) and the bottom seat (18) of the support (19), said plate (40) being rotatably articulated to the central part (22) of each device (10).

14. System (100) according to claim 13, **characterised in that** said intermediate common plate (40) is fastened to the legs (14) of the support (19).

15. System (100) according to claim 13, **characterised in that** said intermediate common plate (40) is fastened to the bottom seat (18) of the support (19).

16. System (100) according to any of claims 13 to 15, **characterised in that** the central part (22) of each device (10) is articulated to a clevis (141) attached to said plate (40).

17. System (100) according to any of claims 7 to 16, **characterised in that** it is installed on an aircraft seat (19).

18. Vehicle seat (19) **characterised in that** it is fitted with a filtering system according to any of claims 7 to 16.

19. Vehicle seat (19) according to claim 18, **characterised in that** it is an aircraft seat.
